# EUROPEAN PATENT APPLICATION

(11) **EP 1 708 414 A1**
(43) Date of publication of application: **04.10.2006**
(21) Application number: 05252034.3
(22) Date of filing: 31.03.2005
(51) Int. Cl.: H04L 12/24, G06F 21/00

(54) **Predicting behaviour of dynamic systems**

(71) Applicant: BRITISH TELECOMMUNICATIONS public limited company, London EC1A 7AJ (GB)
(72) Inventor: The designation of the inventor has not yet been filed
(74) Representative: Geffen, Nigel Paul

(57) **Abstract**

Methods and systems for establishing predictions relating to the behaviour of a system by: deriving, from data relating to previously-observed behaviour of a system, event data indicative of events that have occurred; deriving, from said event data, sequence data indicative of sequences of events that have occurred; deriving, from said sequence data, a measure of probability in respect of each of a plurality of said sequences of events; storing said measures of probability in respect of said plurality of sequences; receiving subsequent-event data relating to subsequently-observed behaviour of a system; deriving, from said subsequent-event data, subsequent-sequence data; and establishing, with reference to said stored measures of probability, a measure of the likelihood of said subsequent sequence being followed by a predetermined event-of-interest or sequence-of-interest, or by one of a set of predetermined events-of-interest or sequences-of-interest, or by an unknown event or sequence of events.

## Description

### Technical Field

The present invention relates to methods and systems for establishing predictions relating to the behaviour of dynamic systems.

### Background to the Invention

The expense required in recovering from a system failure increases rapidly with its complexity, and whilst occasional shutdowns may be tolerable, in cases where downtime harms reputation and revenue, this is unacceptable. In the extreme case of safety critical systems, major failures could become catastrophic. To prevent such failures, detailed status-reporting components can be implemented to aid the controller in deciding on corrective action as necessary. Although in the short-term this response is generally successful, the reaction is aimed towards changing the current status rather than adapting the behaviour. This overlooks the opportunity to prevent failures in the very early stages, often resulting in far less efficient recoveries.

Subtle patterns in system behaviour coinciding to cause initial events may develop over a long period of time, and exhibit seemingly unrelated symptoms. If these cause only minor status warnings that appear to be resolved by the controller on demand, then this can make failures unexpected. Consider the case of a telecommunication network with an alarm management system that logs alarm events (with different severity levels) generated by the huge number of components in the network. Visual investigation of such events will be difficult and will be unlikely to lead to a useful discovery of an event sequence that leads to a major network event (mainly network outage) simply due to the huge amount of reported alarms.

It would thus be desirable to be able to detect unusual patterns in recorded events, applying any degree of system knowledge as a model with which to make comparisons.

The work described by Klemettinen, Mannila and Toivonen in [1] and [2] below has focussed on rapidly detecting the most frequent patterns within a data sequence, effectively using the assumption that all events should occur independently and with equal probability. This is clearly not a valid assumption, and many of the patterns discovered by these algorithms simply echo information that was already known. Another major problem caused by this assumption is that only the most numerically frequent patterns are returned, and rarer, more interesting patterns are ignored. Consequently, the patterns returned comprise mainly of the most common event types, even if these occurred with frequency as expected or perhaps less often. Finally, the prior art has ignored the task of discovering those patterns occurring with unusual rarity, thus omitting half the potential knowledge to be gained.

The work described by Luo, Bridges and Vaughn in [3] below uses a fuzzy data mining approach to extract patterns that represent normal network behaviour for intrusion detection. It is based on an algorithm for mining fuzzy association rules based on the assumption that an attack can be identified as burst traffic in audit log. The fundamental weakness of this approach is its assumption that any burst traffic can be an attack. In most cases the burst traffic represents an advanced stage of the attack, and it would generally have been more important to stop the attack at an earlier stage when it may have been characterised by an unusual, but rare, pattern of network traffic.
[1] Mika Klemettinen, Heikki Mannila & Hannu Toivonen , "A Data Mining Methodology and Its Application to Semi-Automatic Knowledge Acquisition", Database and Expert Systems Applications. 8th International Conference, DEXA'97. Proceedings, 1-2 Sept. 1997, IEEE Comput. Soc pp 670-7
[2] Mika Klemettinen, Heikki Mannila & Hannu Toivonen , "Interactive Exploration of Interesting Findings in the Telecommunication Network Alarm Sequence Analyzer TASA", Information and Software Technology vol. 41, 1999, pp 557-567.
[3] Jianxiong Luo, Susan M Bridges & Rayford B Vaughn , "Fuzzy Frequent Episodes for Real-Time Intrusion Detection", Proceedings of 10th Annual IEEE Conference on Fuzzy Systems, 2-5 Dec. 2001, IEEE pp 368-71 vol.1

### Summary of the Invention

According to the present invention, there is provided a method of establishing predictions relating to the behaviour of a system, said method comprising steps of:
deriving, from data relating to previously-observed behaviour of a system, event data indicative of events that have occurred;
deriving, from said event data, sequence data indicative of sequences of events that have occurred, wherein a sequence of events relates to a plurality of events;
deriving, from said sequence data, a measure of probability in respect of each of a plurality of said sequences of events, said measures of probability being dependent on a statistical measure of previously-observed occurrences of said sequences of events;
storing said measures of probability in respect of said plurality of sequences;
receiving subsequent-event data relating to subsequently-observed behaviour of a system, said subsequent-event data being indicative of events that have occurred subsequent to said previously-observed behaviour;
deriving, from said subsequent-event data, subsequent-sequence data indicative of a sequence of events that has occurred subsequent to said previously-observed behaviour; and
establishing, with reference to said stored measures of probability, a measure of the likelihood of said subsequent sequence being followed by a predetermined event-of-interest or sequence-of-interest, or by one of a set of predetermined events-of-interest or sequences-of-interest, or by an unknown event or sequence of events.

Also according to the present invention, there is provided a system for establishing predictions relating to the behaviour of a dynamic system, said system comprising:
means for deriving, from data relating to previously-observed behaviour of a dynamic system, event data indicative of events that have occurred;
means for deriving, from said event data, sequence data indicative of sequences of events that have occurred, wherein a sequence of events relates to a plurality of events;
means for deriving, from said sequence data, a measure of probability in respect of each of a plurality of said sequences of events, said measures of probability being dependent on a statistical measure of previously-observed occurrences of said sequences of events;
means for storing said measures of probability in respect of said plurality of sequences;
means for receiving subsequent-event data relating to subsequently-observed behaviour of a dynamic system, said subsequent-event data being indicative of events that have occurred subsequent to said previously-observed behaviour;
means for deriving, from said subsequent-event data, subsequent-sequence data indicative of a sequence of events that has occurred subsequent to said previously-observed behaviour; and
means for establishing, with reference to said stored measures of probability, a measure of the likelihood of said subsequent sequence being followed by a predetermined event-of-interest or sequence-of-interest, or by one of a set of predetermined events-of-interest or sequences-of-interest, or by an unknown event or sequence of events.

Preferred embodiments of the invention are capable of resolving problems surrounding the prior art by allowing for detection of sequences or patterns of events occurring with a significantly unusual frequency. Using prior knowledge, the expected frequency for observed patterns may be calculated, and observations of subsequent behaviour may be compared to this figure. Where the values differ sufficiently to be statistically significant, patterns may highlighted as contradicting the model, with interesting results being reported.

Preferred embodiments of the invention are able to react to the detection of unusual patterns in recorded events, applying any degree of system knowledge as a model with which to make comparisons. In the form of rules, this knowledge may then be used to extend or refine a previous system model to provide a greater understanding of the system. Such a revised model may also improve the analysis of incoming data, producing predictions of event progressions more accurately.

Preferred embodiments of the invention aim to extract useful knowledge from a potentially large data set of sequentially ordered events. Such a large data set may be generated from systems such as communication networks alarm management systems or in systems that collect data about the nature of messages going through communication networks (network usage statistics). Data mining techniques have been used in order to discover frequent episodes (i.e. set of ordered events) in such a data collection. However, existing techniques have not been particularly useful for identifying unusual sequences of events that lead to a major event or incident (e.g. network failure or major intrusion in the network from hackers).

Preferred embodiments of the invention may be used to enable an analysis system to detect the key patterns leading up towards a specified event, state, or sequence of events of interest (for positive or negative reasons), with the ability to allow this knowledge to be applied such that advance warnings can be reported about the behaviour of a system as it operates. This functionality can also be applied to other pattern recognition problems, and can be applied where items occur in parallel over a sequence.

Preferred embodiments of the invention may enable analysis to be performed over three levels of prior knowledge:
1) Relationships between events and states unknown.
2) Legal transitions of states and event sequences known.
3) As level 2, with transition probabilities also known.

Level 1 analysis is directed towards finding patterns within sequences where the process underlying their construction is largely unknown.

Level 2 analysis is aimed at finding how strongly the related items are associated with each other. This can help to identify both typical patterns and otherwise, providing an improved model of the system such that analysis can be made on future data for making predictions and detecting abnormalities.

Level 3 analysis implies that the system is currently very well understood, as an accurate model that describes the normal behaviour is already known. The analysis in this case is to determine if the current data is deviating significantly from that which is expected. This would be especially useful in detecting the early signs of component deterioration that affect a system's behaviour.

### Brief Description of the Drawings

Preferred embodiments of the present invention will now be described with reference to the appended drawings, in which:
Figure 1 shows a Markov model suitable for level 2 analysis;
Figure 2 shows a Flow Chart indicating the steps that may be carried out according to a preferred embodiment.

### Description of the Embodiments

To investigate whether or not a system is generating unusual outputs, it may first be necessary to determine what the expectation for the results are. Depending on the level of prior knowledge available, the expected system behaviour may be represented in any of the following ways:

### Level 1 (No prior knowledge):

All events may be assumed to occur randomly with probability according to their proportion in the dataset to be examined. Thus the probability of observing pattern ABC may be assumed to be the product of their individual data proportions.

### Level 2 (Legal order of events known):

A set of rules describing the legal sequences of events may be provided, although with no information regarding the probabilities of each sequence, each possible alternative for every section of the sequence is deemed to be equally likely. If for example only C or D are allowed directly after AB, then the probability of ABC = probability of ABD.

### Level 3 (Legal order and probabilities of events known):

As with level 2, but now the "equal probability" assumption may be replaced by a known probability distribution.

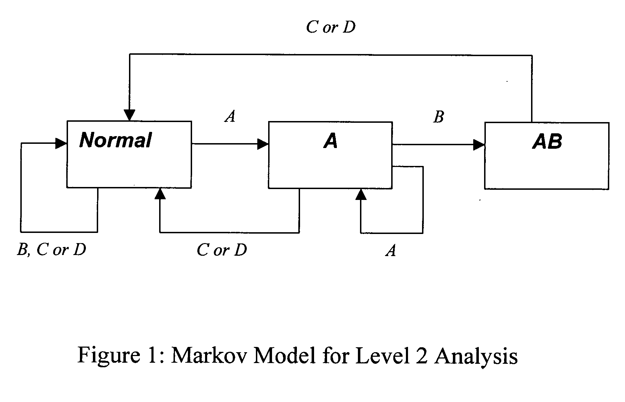

It is possible to represent a dynamic system by creating a Markov model from any level of knowledge, where states are used to represent the antecedents of each rule. For a level 1 analysis the system is just a single state. An example of a system with a level 2 analysis is shown in Figure 1. Here A, B, C and D are the legal events, and one rule exists. Pattern AB can only be followed by events C or D immediately afterwards. Italic letters denote the outputs observed.

Once such a model has been produced, the probabilities of any pattern occurring before or after a specified event can be calculated using the forward and backward algorithms respectively. This allows for direct comparison to the observed data.

The patterns tested may thus be in the form of an event sequence constituting the antecedent, and a single event as the consequent. An example pattern is ABCD followed by E. As increasingly longer patterns are searched for, the possibilities for patterns may increase exponentially. However, their probabilities of occurrence may also decrease by this same factor, meaning that sufficient evidence to support the validity of increasingly longer patterns may rapidly diminish and most can be ignored. This may cause the complexity to reduce quickly to approximately a linear fashion, depending on the amount of data available. Allowing gaps in sequences though may cause the probability for each pattern to fall much more slowly, each one increasing the complexity by a factor equal to the number of event types. Therefore, these types of patterns to be analysed may be limited in their length.

To test whether or not subsequently observed data fits the model, a goodness of fit test such as the chi-square comparison, or other suitable statistical measures of the correspondence between a sample (observations of a pattern) and the population (defined model), may be used. These may be used to return a measure of confidence for the likelihood of the sample truly belonging to the population, i.e. fitting the known model. Where patterns do not fit the model, the result may be reported, possibly detailing the confidence for the existence of a difference along with a measure such as the phi strength, indicating the extent of this difference.

Reported results can also be used to create new rules that can be applied to the assumed model for adjustment of the transition probabilities, or to increase its detail by adding further states. Clearly there may be limits as to how complex and detailed the model can become, but it may often be possible to combine rules such as "ABC→D" with "ABC→E" to get "ABC→(D or E)", thus reducing the number of nodes in the model.

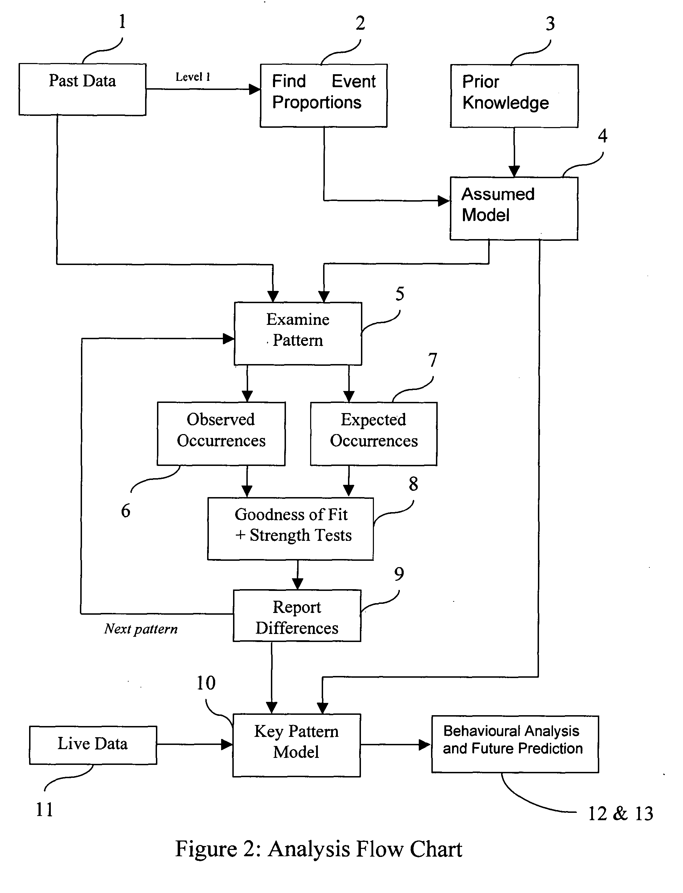

Once a revised model has been completed, any incoming live data can have future events predicted using the same Markov algorithms mentioned earlier. **Figure 2** shows a detailed flowchart of describing the steps involved in the data analysis according to a preferred embodiment.

With reference to **Figure 2**, the steps in an analysis method for establishing predictions according to a preferred embodiment are described in more detail as follows:

### 1. "Past Data":

This can be thought of as a training set of data, used to determine typical behaviour of the system in all its aspects of operation. The larger this dataset is, the better the comparisons with live data may become. This is because longer patterns can be identified as typical or atypical, and the impact of freak events distorting what is detected as typical in past data decreases.

### 2. "Find Event Proportions":

When faced with only Level 1 prior knowledge, we may assume one rule: that each event occurs with a certain probability, determined by its proportion of occurrence in the past data(1).

### 3. "Prior Knowledae":

With Level 2 or Level 3 prior knowledge, we may have some knowledge of the system in the form of basic rules, such as "A can only be followed by B or C".

### 4. "Assumed Model":

From the rules of (2) or (3) a basic representation of the system output process is created. Figure 1 could be a simple example of this.

### 5. "Examine (Chosen) Patterns":

The past data (1) and the assumed model (4) can now be compared, to determine whether or not the model accurately reflects the data seen in the past. The user or analysis system may decide to examine only some of the patterns for greater efficiency.

### 6. "Observed Occurrences":

This may simply relate to the number of times the pattern currently being examined is observed in the past data (1).

### 7. "Expected Occurrences":

By analysing the assumed model (4), the expected number of occurrences of the pattern currently being examined can be determined.

### 8. "Goodness of Fit & Strength Tests":

Observed occurrences (6) and expected occurrences (7), are compared to determine whether or not this pattern's probability is accurately reflected by that predicted using the assumed model.

### 9. "Report Differences":

When significant differences between the past data (1) and the assumed model (4) are found in (8), the result may be reported. The amount of difference before a report is made can be adjusted by the user, and levels may differ between pattern types if desired.
After this step, the next pattern may be studied (5), until all relevant patterns have been examined and assessed.

### 10. "Key Pattern Model":

Taking the assumed model (4) as a starting point, the data from (9) may be used to extend, adapt and refine this model. The key pattern model could thus assess the past data (1) as typical output from a system represented by this new model. This new model would thus be able to provide a better description of the system, providing improved knowledge to the user.

The phrase "Key Pattern Model" is used because the user can choose which parts of the model, i.e. the system to analyse. Often it is the case that a user is interested in examining only part of the system, and the user may change which part they are examining at any time.
(Note that if the user is later interested in patterns chosen not to be examined in (5), the "Key Pattern Model" may not be accurate. Retraining can be performed using the "Key Pattern Model" in place of the "Assumed Model" (4), to remedy this.)

### 11. "Live Data":

Incoming data which the analysis system may assess.
This may be a few recent (i.e. subsequent) events used simply as an input such that future events can be predicted using the "Key Pattern Model" (10), or this may be a large window of data such that overall behaviour can be adjudged as typical or atypical by the "Key Pattern Model".
The live data could be implemented as a queue, such that there is a constant window of data undergoing analysis, and if necessary assessments can be made as each single piece of new data comes in.

### 12. "Future Predictions":

From the live data (11) comparison to the "Key Pattern Model" (10), predictions of the likelihood of key events (chosen by the user) happening soon in the future can be reported. Events that would alter this likelihood can also be reported. For example, a predictive report might state that there is a 10% chance of system failure happening within the next 5 event cycles. It could also say that if event B were to occur in the next 2 cycles this probability rises to 40%, otherwise the chance is reduced to 0%. This information would be useful to a user with the power to intervene and prevent event B, but also to somebody who cannot influence the events, as they can at least make preparations in case B occurs.

### 13. "Behavioural Analysis":

In the same way that the past data (1) and the assumed model (4) were compared to assess if the model accurately reflects the past data, a large window of live data (11) can be compared to the key pattern model (10), such that any differences which could represent atypical behaviour could be reported. If the user wishes, unusual events or behaviour could be "watched", such that the extent of differences between further live data and the key pattern model can be tracked to help determine if the irregularities are the result of some unusual incident, a longer term change in behaviour, or an inaccurate model of the system.

## Claims

1. A method of establishing predictions relating to the behaviour of a system, said method comprising steps of:
deriving, from data relating to previously-observed behaviour of a system, event data indicative of events that have occurred;
deriving, from said event data, sequence data indicative of sequences of events that have occurred, wherein a sequence of events relates to a plurality of events;
deriving, from said sequence data, a measure of probability in respect of each of a plurality of said sequences of events, said measures of probability being dependent on a statistical measure of previously-observed occurrences of said sequences of events;
storing said measures of probability in respect of said plurality of sequences;
receiving subsequent-event data relating to subsequently-observed behaviour of a system, said subsequent-event data being indicative of events that have occurred subsequent to said previously-observed behaviour;
deriving, from said subsequent-event data, subsequent-sequence data indicative of a sequence of events that has occurred subsequent to said previously-observed behaviour; and
establishing, with reference to said stored measures of probability, a measure of the likelihood of said subsequent sequence being followed by a predetermined event-of-interest or sequence-of-interest, or by one of a set of predetermined events-of-interest or sequences-of-interest, or by an unknown event or sequence of events.

2. A method according to claim 1, further comprising a step of selectively initiating action in response to said measure of likelihood.

3. A method according to claim 1 or 2, further comprising a step of initiating a predetermined action in response to an established measure of likelihood of a predetermined event-of-interest or sequence-of-interest exceeding a threshold.

4. A method according to claim 1, 2 or 3, further comprising a step of initiating a predetermined action in response to an established measure of likelihood of an unknown event or sequence of events exceeding a threshold.

5. A method according to claim 3 or 4, wherein said predetermined action comprises providing an indication to a user.

6. A method according to any of the preceding claims, wherein data indicative of one or more predetermined events-of-interest or one or more predetermined sequences-of-interest are stored.

7. A method according to any of the preceding claims, wherein data indicative of one or more events-of-interest or one or more sequences-of-interest are derived from data relating to previously-observed behaviour of said system and are stored.

8. A method according to any of the preceding claims, wherein data indicative of one or more events-of-interest or one or more sequences-of-interest are received from a user and are stored.

9. A method according to any of the preceding claims, said measures of probability also being dependent on known rules relating to allowable and unallowable sequences of events.

10. A method according to claim 9, said measures of probability being further dependent on known rules relating to probabilities of allowable sequences of events.

11. A method according to any of the preceding claims, wherein said step of deriving said measure of probability is performed in respect of one or more of said sequences of events observed to have been followed by an event-of-interest or a sequence-of-interest.

12. A method according to any of the preceding claims, wherein said step of storing said measure of probability is performed in respect of one or more of said sequences of events observed to have been followed by an event-of-interest or sequence-of-interest.

13. A method according to any of the preceding claims, wherein a sequence of events relates to a plurality of successive events.

14. A system for establishing predictions relating to the behaviour of a dynamic system, said system for establishing predictions comprising:
means for deriving, from data relating to previously-observed behaviour of a dynamic system, event data indicative of events that have occurred;
means for deriving, from said event data, sequence data indicative of sequences of events that have occurred, wherein a sequence of events relates to a plurality of events;
means for deriving, from said sequence data, a measure of probability in respect of each of a plurality of said sequences of events, said measures of probability being dependent on a statistical measure of previously-observed occurrences of said sequences of events;
means for storing said measures of probability in respect of said plurality of sequences;
means for receiving subsequent-event data relating to subsequently-observed behaviour of a dynamic system, said subsequent-event data being indicative of events that have occurred subsequent to said previously-observed behaviour;
means for deriving, from said subsequent-event data, subsequent-sequence data indicative of a sequence of events that has occurred subsequent to said previously-observed behaviour; and
means for establishing, with reference to said stored measures of probability, a measure of the likelihood of said subsequent sequence being followed by a predetermined event-of-interest or sequence-of-interest, or by one of a set of predetermined events-of-interest or sequences-of-interest, or by an unknown event or sequence of events.

15. A system according to claim 14, further comprising means for selectively initiating action in response to said measure of likelihood.

16. A system according to claim 14 or 15, further comprising means for initiating a predetermined action in response to an established measure of likelihood of a predetermined event-of-interest or sequence-of-interest exceeding a threshold.

17. A system according to claim 14, 15 or 16, further comprising means for initiating a predetermined action in response to an established measure of likelihood of an unknown event or sequence of events exceeding a threshold.

18. A system according to claim 16 or 17, wherein said predetermined action comprises provision of an indication to a user.

19. A system according to any of claims 14 to 18, comprising means for storing data indicative of one or more predetermined events-of-interest or one or more predetermined sequences-of-interest.

20. A system according to any of claims 14 to 19, comprising means for deriving data indicative of one or more events-of-interest or one or more sequences-of-interest from data relating to previously-observed behaviour of said system, and for storing said derived data.

21. A system according to any of claims 14 to 20, comprising means for receiving data indicative of one or more events-of-interest or one or more sequences-of-interest from a user, and for storing said received data.

22. A system according to any of claims 14 to 21, said measures of probability also being dependent on known rules relating to allowable and unallowable sequences of events.

23. A system according to claim 22, said measures of probability being further dependent on known rules relating to probabilities of allowable sequences of events.

24. A system according to any of claims 14 to 23, wherein said means for deriving said measures of probability is arranged to derive said measures in respect of one or more of said sequences of events observed to have been followed by an event-of-interest or a sequence-of-interest..

25. A system according to any of claims 14 to 24, wherein said means for storing said measures of probability is arranged to store said measures in respect of one or more of said sequences of events observed to have been followed by an event-of-interest or sequence-of-interest.

26. A system according to any of claims 14 to 25, wherein a sequence of events relates to a plurality of successive events.
